(19) Europäisches Patentamt
European Patent Office
Office européen des brevets

(11) EP 3 053 643 A1

(12) **EUROPEAN PATENT APPLICATION**
published in accordance with Art. 153(4) EPC

(43) Date of publication:
**10.08.2016 Bulletin 2016/32**

(21) Application number: **14847235.0**

(22) Date of filing: **30.09.2014**

(51) Int Cl.:
***B01D 71/56*** (2006.01) ***B01D 69/02*** (2006.01)
***B01D 69/12*** (2006.01) ***B01D 71/82*** (2006.01)
***B32B 5/18*** (2006.01) ***B32B 27/34*** (2006.01)
***C08G 69/48*** (2006.01) ***C08L 33/02*** (2006.01)
***C08L 77/00*** (2006.01)

(86) International application number:
**PCT/JP2014/076141**

(87) International publication number:
**WO 2015/046582 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 JP 2013203122**
**29.11.2013 JP 2013247197**

(71) Applicant: **Toray Industries, Inc.**
**Tokyo 103-8666 (JP)**

(72) Inventors:
- **OKABE, Jun**
**Otsu-shi**
**Shiga 520-8558 (JP)**
- **NAKATSUJI, Koji**
**Otsu-shi**
**Shiga 520-8558 (JP)**
- **YONEDA, Keisuke**
**Otsu-shi**
**Shiga 520-8558 (JP)**
- **HAMADA, Tsuyoshi**
**Otsu-shi**
**Shiga 520-8558 (JP)**

(74) Representative: **Kador & Partner**
**Corneliusstraße 15**
**80469 München (DE)**

# (54) COMPOSITE SEMIPERMEABLE MEMBRANE AND METHOD FOR MANUFACTURING SAME

(57) The present invention provides a composite semipermeable membrane achieving high permeate amount and having high capability to inhibit adhesion of foulants to the membrane surface. The present invention relates to a composite semipermeable membrane including: a supporting membrane which includes a substrate and a porous supporting layer; and a polyamide separation functional layer formed on the porous supporting layer, in which an acidic group-containing hydrophilic polymer is introduced onto the surface of the separation functional layer via amide linkage, and relates to a method for producing such a composite semipermeable membrane.

EP 3 053 643 A1

## Description

TECHNICAL FIELD

The present invention relates to a composite semipermeable membrane which ensures a high permeate amount and has high capability to inhibit foulants from adhering thereto. The composite semipermeable membrane obtained by the present invention can be used suitably, for example, for desalination of brackish water.

BACKGROUND ART

Regarding mixture separation, there have been various techniques for removal of substances (e.g. salts) dissolved in solvents (e.g. water). In recent years, utilization of membrane separation methods has been extended as processes for savings in energy and resources. As to the membranes for use in the membrane separation methods, there have been microfiltration membranes, ultrafiltration membranes, nanofiltration membranes, reverse osmosis membranes and the like. Such membranes have been used not only in the case of obtaining potable water e.g. from seawater, brackish water or water containing harmful substances, but also for production of industrial ultrapure water, wastewater treatment, recovery of valuables and the like.

Most of reverse osmosis membranes and nanofiltration membranes currently on the market are composite semipermeable membranes, which are divided into two types: membranes of a type which has a gel layer and an active layer including a crosslinked polymer provided on a supporting membrane; and membranes of a type which has an active layer formed through polycondensation of monomers on a supporting membrane. Of these membranes, composite semipermeable membranes obtained by coating a supporting membrane with a separation functional layer including a crosslinked polyamide produced by polycondensation reaction between a polyfunctional amine and a polyfunctional acid halide have been widely used as separation membranes ensuring high permeate amount and having high separation selectivity.

In fresh-water generation plants using reverse osmosis membranes, high permeate amount has been required for the purpose of further cutting down on running costs. As methods for meeting such a requirement, there have been known the methods of bringing composite semipermeable membranes including crosslinked polyamide polymers as separation functional layers into contact e.g. with an aqueous solution containing nitrous acid (Patent Document 1) and an aqueous solution containing chlorine (Patent Document 2), respectively.

In addition, as one of problems arising in fresh-water generation plants using reverse osmosis membranes, there has been a problem that a permeate amount decreases due to membrane fouling matter including inorganic and organic substances (hereinafter referred to as foulants) (which phenomenon is referred to as fouling hereafter). As methods for improving the fouling, there have been proposed a method of coating a surface of a separation functional layer with polyvinyl alcohol, thereby rendering a charged condition at the membrane surface neutral and reducing interaction with foulants having negative charge (Patent Document 3), a method of modifying a membrane surface through free-radical polymerization reaction using e.g. UV irradiation after formation of crosslinked polyamide polymer (Patent Document 4) and a method of modifying a membrane surface by reacting the acid chloride remaining after formation of a crosslinked polyamide polymer with an amino group-containing hydrophilic compound (Patent Documents 5 and 6).

BACKGROUND ART DOCUMENT

PATENT DOCUMENT

Patent Document 1: JP-A-2011-125856
Patent Document 2: JP-A-63-54905
Patent Document 3: WO 1997/34686
Patent Document 4: JP-T-2011-529789
Patent Document 5: JP-A-2010-240651
Patent Document 6: US Patent Publication No. 2012/0241373

## SUMMARY OF THE INVENTION

### PROBLEMS THAT THE INVENTION IS TO SOLVE

As mentioned above, reverse osmosis membranes are required not only to have salt removal performance and ensure high permeate amount, but also to have anti-fouling properties for performing long-term stable operations. The membranes described in Patent Documents 1 and 2 had a problem that, while it was possible to increase permeate amount, they were poor in anti-fouling properties. On the other hand, Patent Document 3 had a problem that, while it improved the anti-fouling properties by the coating, it brought about a decrease in permeate amount. Further, Patent Document 4 had a problem that, since polyamide molecular chains in the reverse osmosis membrane was cut due to the UV irradiation, the salt removal performance was lowered. And the modification of membrane surfaces with hydrophilic compounds in Patent Documents 5 and 6 caused a problem of lowering the salt removal performance.

An object of the present invention is to provide a composite semipermeable membrane which not only ensures a high permeate amount and has high salt removal performance, but also has high anti-fouling properties.

### MEANS FOR SOLVING THE PROBLEMS

In order to achieve the above-mentioned object, the present invention has the following configuration.

(1) A composite semipermeable membrane including: a substrate; a porous supporting layer formed on the substrate; and a separation functional layer formed on the porous supporting layer,
in which the separation functional layer includes a polyamide and a hydrophilic polymer containing an acidic group, and
the polyamide and the hydrophilic polymer are bonded to each other via an amide linkage.
(2) The composite semipermeable membrane according to (1), in which a surface of the separation functional layer has a mean-square surface roughness of 60 nm or more.
(3) The composite semipermeable membrane according to (1) or (2), in which the acidic group is at least one selected from the group consisting of a carboxy group, a sulfonic acid group, a phosphonic acid group and a phosphoric acid group.
(4) The composite semipermeable membrane according to any one of (1) to (3), in which the hydrophilic polymer is a polymer of a compound containing any one component selected from the group consisting of acrylic acid, methacrylic acid and maleic acid.
(5) The composite semipermeable membrane according to any one of (1) to (4), in which a copolymerization ratio of a structure containing the acidic group in the hydrophilic polymer is 5 mol% to 100 mol%.
(6) The composite semipermeable membrane according to any one of (1) to (5), in which the hydrophilic polymer has a weight average molecular weight of 5,000 or more.
(7) The composite semipermeable membrane according to any one of (1) to (6), in which the hydrophilic polymer has a weight average molecular weight of 100,000 or more.
(8) The composite semipermeable membrane according to any one of (1) to (7), in which the hydrophilic polymer is a copolymer of two or more components.
(9) The composite semipermeable membrane according to (8), in which the copolymer of two or more components contains at least one component selected from the group consisting ofpolyvinyl alcohol, polyvinyl acetate and polyvinyl pyrrolidone.
(10) The composite semipermeable membrane according to any one of (1) to (9), in which the polyamide has azo groups, and
in functional groups contained in the polyamide, a ratio of (molar equivalent of the azo groups) / (molar equivalent of amide groups) is 0.1 or more, and a ratio of (molar equivalent of amino groups) / (molar equivalent of the amide groups) is 0.2 or more.
(11) The composite semipermeable membrane according to any one of (1) to (10), in which, after an aqueous solution having a pH of 6.5 and a NaCl concentration of 2,000 mg/L has been allowed to permeate the composite semipermeable membrane for 24 hours at 25°C under a pressure of 1.55 MPa, the composite semipermeable membrane ensures a permeate amount of 0.80 $m^3/m^2$/day or more.
(12) The composite semipermeable membrane according to any one of (1) to (11), having a F2/F1 value of 0.80 or more, in which, when filtration of an aqueous solution having a pH of 6.5 and a NaCl concentration of 2,000 mg/L is performed for one hour at 25°C under a pressure of 1.55 MPa, a permeate amount in a case of using the composite semipermeable membrane whose polyamide surface is in a state before being coated with the hydrophilic polymer is represented as F1, and a permeate amount in a case of using the composite semipermeable membrane whose polyamide surface is in a state after being coated with the hydrophilic polymer is represented as F2.

(13) The composite semipermeable membrane according to any one of (1) to (12), having a F4/F3 value of 0.80 or more, in which F3 represents a permeate amount obtained when filtration of an aqueous solution having a pH of 6.5 and a NaCl concentration of 2,000 mg/L is performed for one hour at 25°C under a pressure of 1.55 MPa through the composite semipermeable membrane, and F4 represents a permeate amount obtained when subsequently adding polyoxyethylene(10) octyl phenyl ether to the aqueous solution so as to have a concentration thereof of 100mg/L and performing the filtration for one hour.

(14) A method for producing a composite semipermeable membrane including: a substrate; a porous supporting layer formed on the substrate; and a separation functional layer formed on the porous supporting layer, the method including, as for the separation functional layer:

a step A of bringing an aqueous solution containing a polyfunctional amine and an organic solvent containing a polyfunctional acid halide into contact with each other on the porous supporting layer to form a polyamide, followed by bringing the polyamide into contact with a solution containing a reagent which produces a diazonium salt or a derivative thereof through a reaction with a primary amino group;
a step B of bringing the polyamide into contact with a solution containing a reagent which causes a diazo coupling reaction with a diazonium salt or a derivative thereof; and
a step C of bringing the polyamide into contact with a solution containing: a reagent which converts a carboxyl group into a carboxylic acid derivative; and a hydrophilic polymer having at least either one of acidic groups and hydroxyl groups.

## ADVANTAGE OF THE INVENTION

The present invention realizes compatibility in the composite semipermeable membrane between a high permeate amount and a high capability to inhibit foulants from adhering to the membrane.

## MODE FOR CARRYING OUT THE INVENTION

### 1. Composite Semipermeable Membrane

The composite semipermeable membrane of the present invention includes: a supporting membrane including a substrate and a porous supporting layer; and a separation functional layer which is disposed on the porous supporting layer and is formed from a crosslinked polyamide (which may be simply referred to as "polyamide" hereafter) and a hydrophilic polymer. In the composite semipermeable membrane of the present invention, the hydrophilic polymer is introduced onto the polyamide surface thereof via amide linkage.

### (1-1) Separation functional layer

The separation functional layer is a layer which assumes, in the composite semipermeable membrane, the function of separating a solute. The configuration thereof, such as composition and thickness of the separation functional layer, is adjusted in accordance with the intended use of the composite semipermeable membrane.

To be more specific, the separation functional layer is formed from a crosslinked polyamide obtained by interfacial polycondensation reaction between a polyfunctional amine and a polyfunctional acid halide, and a hydrophilic polymer introduced onto the crosslinked polyamide via amide linkage.

Herein, the polyfunctional amine preferably includes at least one component selected from anaromatic polyfunctional amine and an aliphatic polyfunctional amine.

The term "aromatic polyfunctional amine" refers to an aromatic amine having two or more amino groups per one molecule thereof, and has no particular restrictions. Examples of such an aromatic amine include meta-phenylenediamine, para-phenylenediamine and 1,3,5-triaminobenzene. And examples of an N-alkylation product of such an aromatic amine include N,N-dimethyl-meta-phenylenediamine, N,N-diethyl-meta-phenylenediamine, N,N-dimethyl-para-phenylenediamine and N,N-diethyl-para-phenylenediamine. From the viewpoint of stability in developing performance, meta-phenylenediamine (hereafter referred to as m-PDA) or 1,3,5-triaminobenzene is especially preferred.

On the other hand, the term "aliphatic polyfunctional amine" refers to an aliphatic amine having two or more amino groups per one molecule thereof, and such an amine is preferably a piperazine-type amine or a derivative thereof. Examples of such an amine include piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, 2,5-di-n-butylpiperazine and ethylenediamine. From the viewpoint of stability in developing performance, piperazine or 2,5-dimethylpiperazine is especially preferred. These polyfunctional amines may be used alone or as a mixture of two or more thereof.

The term "polyfunctional acid halide" is an acid halide having two or more halogenocarbonyl groups per one

molecule thereof and has no particular restrictions so long as it can produce polyamide through the reaction with a polyfunctional amine as described above. Examples of the polyfunctional acid halide include halides of oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, 1,3,5-benzenetricarboxylic acid, 1,2,4-benzenetricarboxylic acid, 1,3-benzenedicarboxylic acid and 1,4-benzenedicarboxylic acid. Of these acid halides, an acid chloride is preferred, and trimesoyl chloride (hereafter abbreviated as TMC), namely a halide of 1,3,5-benzenetricarboxylic acid, is especially preferred in terms of cost efficiency, easy availability, easy handling, high reactivity and the like. Those polyfunctional acid halides may be used alone or as mixtures of two or more thereof.

The polyamide has amide groups derived from the polymerization reaction between a polyfunctional amine and a polyfunctional acid halide, and amino groups and carboxyl groups originated from their unreacted terminal functional groups. The amounts of these functional groups affect the permeability and salt removal ratio of the composite semipermeable membrane.

By carrying out chemical treatment after the formation of polyamide, it becomes possible to convert functional groups in the polyamide or introduce new functional groups into the polyamide, thereby improving the permeate amount and salt removal ratio of the composite semipermeable membrane. Examples of a functional group to be introduced into the polyamide include an alkyl group, an alkenyl group, an alkynyl group, a halogen group, a hydroxyl group, an amino group, a carboxy group, an ether group, a thioether group, an ester group, an aldehyde group, a nitro group, a nitroso group, a nitrile group and an azo group.

For example, introduction of azo groups into polyamide is preferable because it can enhance the salt removal ratio. It is preferable that azo groups is introduced in such an amount that the ratio of (molar equivalent of azo groups) / (molar equivalent of amide groups) in the polyamide becomes 0.1 or more. When such a ratio is 0.1 or more, the higher salt removal ratio can be obtained.

Amide linkages are formed between amino groups in the polyamide and acidic groups in the hydrophilic polymer. It is preferable that the ratio of (molar equivalent of amino groups) / (molar equivalent of amide groups) in the polyamide is 0.2 or more, preferably 0.3 or more. The more the amount of amino groups in the polyamide, the easier the introduction of a hydrophilic polymer onto the polyamide, resulting in achievement of excellent anti-fouling properties.

The amount of those functional groups in the polyamide can be determined e.g. by $^{13}C$ solid-state NMR measurement. To be more specific, the substrate is separated from the composite semipermeable membrane, whereby the separation functional layer and the porous supporting layer are obtained. Then the porous supporting layer is dissolved and removed, whereby the separation functional layer is obtained. The thus-obtained separation functional layer is subjected to DD/MAS-$^{13}C$ solid-state NMR measurement, and the integral of a peak assigned to the carbon atom to which each functional group is bonded is calculated. From this integral, the amount of each functional group can be evaluated.

In the present invention, it is required that a hydrophilic polymer is introduced onto the polyamide surface via amide linkage. The term "hydrophilic polymer" as used in the present invention refers to a polymer which can be dissolved in an amount of at least 0.5 g in 1L of water under the condition of 25°C.

Specifically, the hydrophilic polymer is bonded to the polyamide which is the main component of the separation functional layer by forming amide linkages via, in most cases, terminal amino groups of the polyamide. More specifically, the hydrophilic polymer is preferably disposed on the surface of the separation functional layer (or equivalently, the surface of the layer formed of polyamide). As mentioned below, introduction of the hydrophilic polymer after formation of the polyamide allows disposition of the hydrophilic polymer on the surface of a portion formed by the polyamide, in the separation membrane. This is because it is thought that the hydrophilic polymer hardly penetrates the polyamide layer which substantially assumes a separation function. In addition, by repeating a series of measurement operations in which after the presence of a hydrophilic polymer on the surface of the separation functional layer is detected, etching is performed, and further detection of the hydrophilic polymer is performed, it is possible to confirm that a large quantity of hydrophilic polymer is present on the surface of the separation functional layer.

Introduction of a hydrophilic polymer onto the separation functional layer via amide linkage makes it possible for the separation membrane to develop high anti-fouling properties. On the other hand, introduction of a hydrophilic polymer via weak bonding or interaction is undesirable because the introduced hydrophilic polymer is easily removed from the separation functional layer at the time of cleaning with a chemical solution or the like. Herein, the term "anti-fouling properties" may include both inhibition of fouling and minimization of reduction in performance even under occurrence of fouling. Reasons why the anti-fouling properties can be obtained by a hydrophilic polymer are thought as follows.

A hydrophilic polymer is able to inhibit foulants from adhering to the separation functional layer by the mobility thereof. The fouling inhibition by the mobility is effective against any of nonionic, cationic and anionic foulants. In addition, because of the presence of a hydrophilic polymer on the surface of the separation functional layer, foulants are more likely to adhere to the hydrophilic polymer rather than the polyamide. In other words, it is thought that even when foulants adhere to the surface of the separation functional layer, the foulants and the polyamide are separated by the hydrophilic

polymer and adhesion of the foulants occurs at a location some distance from the polyamide. Therefore the reduction in performance of the separation membrane can be minimized.

In view of effects of enhancing solubility in water in particular and reducing adhesion of negatively charged foulants, it is preferable for the hydrophilic polymer to contain an acidic group.

Examples of a suitable acidic group include a carboxylic group, a phosphonic acid group, a phosphoric acid group and a sulfonic acid group. The hydrophilic polymer may contain only one or more than one of these acidic groups. As to the structure of these acidic groups, they may be present in any of an acid form and states of an ester compound, an acid anhydride and a metal salt.

Such hydrophilic polymers are preferably polymers produced from monomers having ethylenic unsaturated groups in view of chemical stability of the produced polymers. Although monomers having ethylenic unsaturated groups can have two or more acidic groups per one molecule thereof, those having one or two acidic groups per one molecule thereof are preferred in view of easy availability and the like.

Examples of a carboxylic group-containing monomer among the aforementioned monomers having ethylenic unsaturated groups include maleic acid, maleic anhydride, acrylic acid, methacrylic acid, 2-(hydroxymethyl)acrylic acid, 4-(meth)acryloyloxyethyltrimellitic acid and anhydrides corresponding thereto, 10-methacryloyloxydecylmalonic acid, N-(2-hydroxy-3-methacryloyloxypropyl)-N-phenylglycine and 4-vinylbenzoic acid. Of these monomers, acrylic acid, methacrylic acid and maleic acid are preferred in view of general versatility and copolymerization capability.

Examples of a phosphonic acid group-containing monomer among the aforementioned monomers having ethylenic unsaturated groups include vinyl phosphonic acid, 4-vinylphenylphosphonic acid, 4-vinylbenzylphosphonic acid, 2-methacryloyloxyethylphosphonic acid, 2-methacrylamideethylphosphonic acid, 4-methacrylamide-4-methylphenylphosphonic acid, 2-[4-(dihydroxyphosphoryl)-2-oxa-butyl]acrylic acid and 2-[2-(dihydroxyphosphoryl)ethoxymethyl] acrylic acid 2,4,6-trimethylphenyl ester.

Examples of a phosphoric acid ester group-containing monomer among the aforementioned monomers having ethylenic unsaturated groups include phosphoric acid monohydrogen 2-methacryloyloxypropyl ester and phosphoric acid dihydrogen 2-methacryloyloxypropyl ester, phosphoric acid monohydrogen 2-methacryloyloxyethyl ester and phosphoric acid dihydrogen 2-methacryloyloxyethyl ester, phosphoric acid monohydrogen 2-methacryloyloxyethyl phenyl ester, dipentaerythritol pentamethacryloyloxyphosphate, phosphoric acid dihydrogen 10-methacryloxyoxydecyl ester, dipentaerythritol pentamethacryloyloxyphosphate, phosphoric acid mono(1-acryloylpiperidine-4-yl) ester, 6-(methacrylamide)hexyl dihydrogen phosphate and 1,3-bis(N-acryloyl-N-propylamino)propene-2-yl dihydrogen phosphate.

Examples of a sulfonic acid group-containing monomer among the aforementioned monomers having ethylenic unsaturated groups include vinylsulfonic acid, 4-vinylphenylsulfonic acid and 3-(methacrylamide)propylsulfonic acid.

It is preferable that hydrophilic polymers for use in the present invention have a weight average molecular weight of 2,000 or more. It is thought that the hydrophilic polymer introduced onto the surface of the polyamide separation functional layer may have, by the mobility thereof, the effect of inhibiting foulants from adhering to the membrane surface. The weight average molecular weight of the hydrophilic polymer is more preferably 5,000 or more, further preferably 100,000 or more.

The hydrophilic polymer may be a homopolymer produced from the ethylenic unsaturated group-containing monomer as described above, and it may be a copolymer formed of two or more monomer components chosen in response to the end-use purpose. Examples of a copolymerization component include polyvinyl pyrrolidone, polyvinyl alcohol, polyvinyl acetate, polyethylene glycol, polypropylene glycol, polyethyleneimine, polyvinylamine, polyallylamine, and block copolymers of these hydrophilic polymers and hydrophobic polymers, graft copolymers of these polymers, random copolymers of these polymers, and the like. Of the hydrophilic polymers described above, polyvinyl pyrrolidone, polyvinyl alcohol and polyvinyl acetate are preferable in view of easiness of copolymerization and reduction in adhesion to foulants.

In the hydrophilic polymer, it is preferable that the proportion of acidic group-containing structures as monomer units is from 5 mol% to 100 mol%. In other words, it is preferable that the ratio of (number of moles of acidic group-containing monomers) / (number of moles of monomers constituting the hydrophilic polymer), namely copolymerization ratio, is from 5% to 100%. When the proportion of acidic group-containing monomer units in the hydrophilic polymer is 5 mol% or more, the hydrophilic polymer is bonded to the polyamide to a sufficient degree, and adhesion of foulants to the membrane surface can be inhibited by virtue of mobility of the hydrophilic polymer. The proportion of acidic group-containing structural units is more preferably from 10 mol% to 100 mol%, further preferably from 40 mol% to 100 mol%.

It is preferable that the mean-square surface roughness (hereinafter abbreviated as Rms) of the separation functional layer surface is 60 nm or more. When the mean-square surface roughness is 60 nm or more, the surface area of the separation functional layer becomes large, whereby the permeate amount is increased. On the other hand, when the mean-square surface roughness is less than 60 mm, the permeate amount is decreased.

Incidentally, the mean-square surface roughness can be measured with an atomic force microscope (hereinafter abbreviated as AFM). The mean-square surface roughness is the square root of a mean value of square value of the deviation from the reference face to the specified faces. Herein, the term "measurement faces" refer to faces which

indicate all the measurement data, the term "specified faces" refer to faces targeted for roughness measurement and a clip-specified particular portion in the measurement faces, and the term "reference face" refers to a plane represented by Z=Z0 in which a mean value of the heights of the specified faces is represented by Z0. The AMF usable herein is e.g. Nano Scope IIIa manufactured by Digital Instruments Corporation.

The mean-square surface roughness of the separation functional layer surface can be controlled by monomer concentrations and temperature at the time of performing interfacial polycondensation for forming the separation functional layer. For example, low temperatures under interfacial polycondensation make the mean-square surface roughness small, while high temperatures under interfacial polycondensation make the mean-square surface roughness large. Further, in the case of modifying the separation functional layer surface with a hydrophilic polymer, a thick layer of the hydrophilic polymer makes the mean-square surface roughness small, and it is therefore preferred that the modification is carried out so as to ensure the mean-square surface roughness of 60 nm or more.

(1-2) Supporting Membrane

The supporting membrane is a member for imparting strength to the separation functional layer, and the supporting membrane itself has substantially no function of separating ions and the like. The supporting membrane includes a substrate and a porous supporting layer.

The supporting membrane have no particular restrictions as to the size and distribution of pores therein, but it is preferably configured so that fine pores are distributed uniformly throughout the membrane or the sizes of fine pores in the membrane gradually increase from the surface on the side for forming the separation functional layer to the surface on the other side, and besides, the sizes of the fine pores at the surface on the side for forming the separation functional layer are in a range of 0.1 nm to 100 nm.

The supporting membrane can be obtained through the formation of a porous supporting layer on a substrate e.g. by flow-casting a polymer onto a substrate. The supporting membrane has no particular restrictions as to materials used therefor and the shape thereof.

Examples of the substrate include fabrics including at least one kind selected from polyesters and aromatic polyamides. The polyesters which have high mechanical and thermal stabilities are particularly preferably used.

As the fabrics for substrate use, long-fiber nonwoven fabric and short-fiber nonwoven fabric can be used suitably. However, long-fiber nonwoven fabric is more suitable as the substrate because, the substrate is required to have excellent membrane-forming properties, so as to prevent permeation of a polymer solution to the backside of the substrate because of overpermeation of the solution when the solution is flow-cast onto the substrate, to inhibit the substrate and the porous supporting layer from peeling off, and further to inhibit occurrence of unevenness of the membrane and defects like pinholes due to the fluffiness of the substrate or the like.

As an example of long-fiber nonwoven fabrics, mention may be made of long-fiber nonwoven fabric made up of thermoplastic continuous filaments. The use of a substrate formed of long-fiber nonwoven fabric allows prevention of unevenness due to fluffiness occurring when using a substrate formed of short-fiber nonwoven fabric and casting a polymer solution onto the substrate, and prevention of membrane defects. Further, during the process of continuously forming a composite semipermeable membrane, tension is applied to a substrate in the membrane-forming direction, and therefore the use of long-fiber nonwoven fabric as the substrate is preferred because of its excellent dimensional stability.

In particular, it is preferred that the fibers disposed on the side opposite to the porous supporting layer-side of the substrate is in longitudinal orientation with respect to the membrane-forming direction. This is because the longitudinal orientation of fibers makes it possible to retain the strength of the substrate and prevent membrane breakage and the like. Herein, the term "longitudinal orientation" means that the orientation direction of fibers is parallel to the membrane-forming direction. On the other hand, a case where the orientation direction of fibers is perpendicular to the membrane-forming direction is referred to as traverse orientation.

In the nonwoven fabric substrate, it is preferable that the degree of fiber orientation on the side opposite to the porous supporting layer is from 0° to 25°. The term "degree of fiber orientation" used herein is an index indicating the orientations of fibers in the nonwoven fabric substrate constituting the supporting membrane, and when the membrane-forming direction at the time of continuous production of membrane is taken as 0° and the direction perpendicular to the membrane-forming direction, or equivalently, the width direction of the nonwoven fabric substrate, is taken as 90°, the degree of fiber orientation refers to the average angle of fibers constituting the nonwoven fabric. Thus, the closer the degree of fiber orientation to 0°, the more fibers are in the longitudinal orientation, and the closer to 90° the degree of fiber orientation, the more fibers are in traverse orientation.

In the process of producing a composite semipermeable membrane and the process of producing elements, heating steps are included, and they cause a phenomenon that the supporting membrane or the composite semipermeable membrane contract. On the occasion of continuous membrane production in particular, no tension is imparted to the width direction; as a result, contraction tends to occur in the width direction. Contraction of the supporting membrane

or the composite semipermeable membrane causes problems of dimensional stability and the like, and hence it is desired that the substrate is low in thermal dimension change ratio.

In the nonwoven fabric substrate, when the difference in degree of fiber orientation between fibers disposed on the side opposite to the porous supporting layer and fibers disposed on the side of the porous supporting layer is from 10° to 90°, thermal change in the width direction can be favorably inhibited.

It is preferable for the substrate to have an air permeability of 2.0 $cc/cm^2/sec$ or more. When the air permeability is within this range, the permeate amount from the composite semipermeable membrane becomes high. As a reason therefor, it is thought that, when casting a polymer onto the substrate, followed by immersing in a solidification bath in the step of forming the supporting membrane, a speed of nonsolvent substitution from the substrate side is increased, whereby a change in internal structure of the porous supporting layer occurs to affect on the amount of monomers retained and diffusion speed in the subsequent process for forming the separation functional layer.

Incidentally, the air permeability can be measured with a Frazier-type testing machine based on JIS L1096 (2010). For example, a specimen having a size of 200 mm x 200 mm is cut out from a substrate, and mounted in a Frazier-type testing machine. And the intake fun and air hole of the testing machine are adjusted so that the inclined barometer comes to indicate a pressure of 125 Pa, and on the basis of the pressure indicated by the vertical barometer under such a condition and the type of the air hole used, the amount of air passing through the substrate, namely air permeability, can be calculated. As a Frazier-type testing machine, an air permeability tester KES-F8-AP1 manufactured by KATO TECH CO., LTD., and the like can be used.

In addition, it is preferable that the thickness of the substrate is in a range of 10 μm to 200 μm, more preferably 30 μm to 120 μm.

Examples of a material used for the porous supporting layer include homopolymers and copolymers of polysulfone, polyether sulfone, polyamide, polyester, cellulose-based polymers, vinyl polymers, polyphenylene sulfide, polyphenylene sulfide sulfone, polyphenylene sulfone and polyphenylene oxide. These homopoymers and copolymers may be used alone or as blends of two or more thereof. As the cellulose-based polymers, cellulose acetate, cellulose nitrate and the like can be used. As the vinyl polymers, polyethylene, polypropylene, polyvinyl chloride, polyacrylonirile and the like can be used. Of these polymers, homopolymers and copolymers of polysulfone, polyamide, polyester, cellulose acetate, cellulose nitrate, polyvinyl chloride, polyacrylonitrile, polyphenylene sulfide and polyphenylene sulfide sulfone are preferable. Among them, cellulose acetate, polysulfone, polyphenylene sulfide sulfone and polyphenylene sulfone are further preferred. Further, polysulfone in particular can be generally used because it has high chemical, mechanical and thermal stabilities and ensures easy molding.

More specifically, the use of polysulfone including the repeating units represented by the following chemical formula is preferred because it contributes to easy size control of pores in the supporting membrane and high dimensional stability.

[Chem. 1]

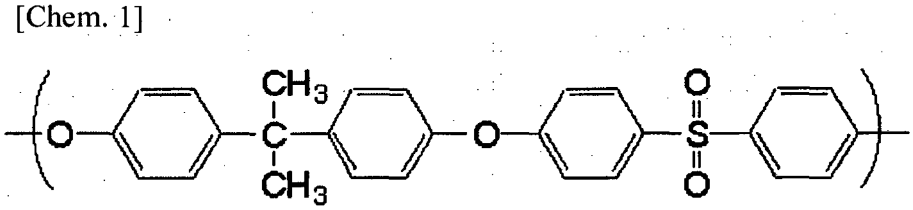

For example, an N,N-dimethylformamide (hereinafter abbreviated as DMF) solution of the foregoing sulfone is cast in a uniform thickness onto a tight-woven polyester cloth or a polyester nonwoven fabric, and then wet-coagulated in water, thereby being able to form a supporting membrane which has fine pores having a diameter of 10 nm or less in most portions of the surface thereof.

The thickness of the supporting membrane has an influence on the strength of a composite semipermeable membrane obtained therefrom and the packing density of an element into which the membrane is formed. In order to ensure sufficient mechanical strength and packing density, it is preferable that the supporting membrane has a thickness in a range of 30 μm to 300 μm, more preferably in a range of 100 μm to 220 μm.

The geometry of the porous supporting layer can be observed under a scanning electron microscope, a transmission electron microscope or an atomic force microscope. In the case of using e.g. a scanning electron microscope for the observation, a sample for cross-section observation is prepared by separating the porous supporting layer from the substrate, followed by cutting by a freeze fracturing method. To the thus prepared sample is applied a thin coating of platinum, platinum-palladium, or ruthenium tetrachloride, preferably ruthenium tetrachloride, and the resulting sample is observed under a high-resolution field-emission scanning electron microscope (UHR-FE-SEM) operating at an acceleration voltage of 3 to 15 kV. As the high resolution field-emission scanning electron microscope, an electron microscope Model S-900 manufactured by Hitachi Limited, or the like can be used.

The supporting membrane for use in the present invention may be chosen from various types of commercially available materials, such as Millipore Filter VSWP, trade name, manufactured by Millipore Corporation, and Ultra Filter UK10, trade name, manufactured by ADVANTEC, or may also be produced in accordance with the methods described in Office of Saline Water Research and Development Progress Report, No. 359 (1968) and the like.

It is preferable that the thickness of the porous supporting layer is in a range of 20 μm to 100 μm. In a case where the porous supporting layer has a thickness of 20 μm or more, satisfactory pressure resistance can be obtained, and besides a defects-free uniform supporting membrane can be obtained. Thus, the composite semipermeable membrane provided with such a porous supporting layer can show excellent salt removal performance. On the other hand, in a case where the thickness of the porous supporting layer exceeds 100 μm, the amount of unreacted materials remaining in the course of production increases, whereby the permeate amount decreases and chemical resistance also deteriorates.

Further, the thicknesses of the substrate and the composite semipermeable membrane can be measured with a digital thickness gauge. In addition, the thickness of the separation functional layer is very thin as compared with the thickness of the supporting membrane. Accordingly, the thickness of the supporting membrane can be regarded as the thickness of the composite semipermeable membrane. Thus the thickness of the porous supporting layer can be calculated in an abbreviated manner by measuring the thickness of the composite semipermeable membrane with a digital thickness gauge and subtracting the thickness of the substrate from the thickness of the composite semipermeable membrane. As the digital thickness gauge, PEACOCK manufactured by OZAKI MFG CO., LTD., and the like can be used. In the case of using a digital thickness gauge, thicknesses at 20 points are measured and the average value thereof is calculated.

Incidentally, when the thickness of the substrate or the thickness of the composite semipermeable membrane is difficult to measure with a thickness gauge, it may be measured with a scanning electron microscope. From cross-section observations at 5 points chosen arbitrarily on an electron photomicrograph of one sample, thicknesses are measured, and the average value thereof is calculated, whereby the thickness may be determined.

2. Production Method

Next, a method for producing the composite semipermeable membrane is described. The production method includes a process for forming the supporting membrane and a process for forming the separation functional layer.

(2-1) Process for Forming Supporting Membrane

The process for forming the supporting membrane includes a step of applying a polymer solution to the substrate, and a step of coagulating the polymer by immersing the solution-applied substrate in a coagulation bath.

In the step of applying a polymer solution to the substrate, the polymer solution is prepared by dissolving a polymer as a component of the porous supporting layer in a good solvent for the polymer.

In the case of using polysulfone as the polymer, it is preferable that the temperature of the polymer solution at the time of application is in a range of 10°C to 60°C. So long as the temperature of the polymer solution is within this range, there occurs no precipitation of the polymer, and the polymer solution is solidified after having been sufficiently impregnated into interstices among the fibers of the substrate. As a result, the porous supporting layer is bound firmly to the substrate by an anchor effect. Thus an excellent supporting membrane can be obtained. The temperature range suitable for the polymer solution can be adjusted as appropriate depending on the kind of polymer used and the desired viscosity of the solution.

The time period from the application of the polymer solution to the substrate to the immersion in a coagulation bath is preferably in a range of 0.1 second to 5 seconds. So long as the time period to the immersion in a coagulation bath is within this range, the organic-solvent solution containing the polymer is solidified after having been sufficiently impregnated into interstices among the fibers of the substrate. Incidentally, a suitable range of the time period to the immersion in a coagulation bath can be adjusted as appropriate depending on the kind of the polymer solution used, the desired viscosity for the solution used, and the like.

As to the coagulation bath, water is generally used, but any solvent may be used so long as it does not dissolve the polymer as a component of the porous supporting layer. The membrane geometry of the supporting membrane to be obtained varies according to the composition of the coagulation bath, and the composite semipermeable membrane to be obtained also varies accordingly. It is preferable that the temperature of the coagulation bath is from -20°C to 100°C, more preferably from 10°C to 50°C. So long as the temperature of the coagulation bath is within this range, thermal motion-induced vibrations at the surface of the coagulation bath does not become strong, and the smoothness of the membrane surface after formation of the membrane can be assured. In addition, so long as the temperature is within this range, a sufficient coagulation rate can be obtained and satisfactory membrane-forming properties are attained.

Then, the thus obtained supporting membrane is cleaned with hot water for the purpose of removing the solvent

remaining in the membrane. At this time, the temperature of hot water is preferably from 40°C to 100°C, more preferably from 60°C to 95°C. So long as the temperature is within this range, the contraction degree of the supporting membrane does not become high, and satisfactory permeate amount can be obtained. Further, So long as the temperature is within this range, sufficient cleaning effect can be obtained.

(2-2) Process for Forming Separation Functional Layer

Next, the process for forming the separation functional layer constituting the composite semipermeable membrane is explained. The process for forming the separation functional layer includes:

(a) a step of forming a crosslinked polyamide by performing interfacial polycondensation on the surface of the supporting membrane using an aqueous solution containing a polyfunctional amine and an organic-solvent solution containing a polyfunctional acid halide; and
(b) a step of introducing a hydrophilic polymer onto the polyamide obtained in the step (a) via amide linkages.

The process for forming the separation functional layer may further includes:

(c) a step of cleaning the crosslinked polyamide obtained in the step (a);
(d) a step of bringing the crosslinked polyamide into contact with a reagent which produces a diazonium salt or a derivative thereof through a reaction with a primary amino group of the crosslinked polyamide; and
(e) a step of bringing the crosslinked polyamide into contact with a reagent which reacts with a diazonium salt or a derivative thereof to convert functional groups of the polyamide or introduce new functional groups into the polyamide.

It is essential only that the step (b) is performed after the step (a). And any one or more of the steps (c) to (e) may be performed between the step (a) and the step (b). When the diazo coupling reaction as mentioned below is performed as the step (e), the number of amino groups increases. Accordingly, it is thought that the hydrophilic polymer can be introduced in a greater amount by performing the step (b) after the step (e) than by performing the step (b) before the step (e).

The process in the case of performing each step in the order of (a), (c), (d), (e) and (b) is illustrated below.

In the step (a), any organic solvent may be used as an organic solvent for use in dissolving a polyfunctional acid halide so long as it is immiscible with water, does not damage the supporting membrane and does not inhibit the crosslinked polyamide formation reaction. As typical examples of such an organic solvent, mention may be made of hydrocarbons in a liquid state and halogenated hydrocarbons such as trichlorotrifluoroethane and the like. With consideration given to not only being a substance not destroying the ozone layer but also easy availability and handling and safety in handling, octane, nonane, decane, undecane, dodecane, tridecane, tetradecane, heptadecane, hexadecane, cyclooctane, ethylcyclohexane, 1-octene and 1-decene are favorably used alone or as a mixture thereof.

Into a polyfunctional amine aqueous solution and an organic-solvent solution containing a polyfunctional acid halide, compounds such as an acylation catalyst, a polar solvent, an acid capture, a surfactant and an antioxidant may be incorporated when required so long as they do not inhibit the reaction between the two reactants.

In order to perform interfacial polycondensation on the supporting membrane, first of all, the surface of the supporting membrane is coated with a polyfunctional amine aqueous solution. Herein, it is preferable that the concentration of the polyfunctional amine aqueous solution is in a range of 0.1 wt% to 20 wt%, more preferably in a range of 0.5 wt% to 15 wt%.

As to the method for coating the surface of the supporting membrane with the polyfunctional amine aqueous solution, any method may be adopted as far as it allows a uniform and continuous coating of the polyfunctional amine aqueous solution to be formed on the surface of the supporting membrane. For example, known coating methods, such as the method of applying the aqueous solution to the supporting membrane surface and the method of immersing the supporting membrane in the aqueous solution, may be adopted. The period during which the supporting membrane is in contact with the polyfunctional amine aqueous solution is preferably in the range of 5 seconds to 10 minutes, more preferably in the range of 10 seconds to 3 minutes. Next, a liquid draining-off step is performed favorably in order to remove the aqueous solution applied in excess. As an example of a method for draining the liquid off, there is a method in which the membrane surface is held vertically to make the excess aqueous solution flow down naturally. After the liquid is drained off, the membrane surface is dried, whereby the water in the aqueous solution may be totally or partially removed.

Then, the organic solvent solution containing a polyfunctional acid halide described above is applied onto the supporting membrane coated with the polyfunctional amine aqueous solution, and a crosslinked polyamide is formed by interfacial polycondensation reaction. Herein, the period during which the interfacial polycondensation is performed is preferably 0.1 second to 3 minutes, more preferably 0.1 second to 1 minute.

The concentration of a polyfunctional acid halide in the organic solvent solution has no particular limitations, but too low concentrations thereof may bring about insufficient formation of a polyamide which is an active layer, and cause defects, while too high concentrations thereof are disadvantageous in view of cost. Accordingly, the suitable concentration the polyfunctional acid halide is on the order of 0.01 wt% to 1.0 wt%.

Then, it is preferable that a liquid draining-off step is performed in order to remove the organic solvent solution after having undergone the reaction. As an example of a method for removing the organic solvent solution, there is a method in which the membrane is held vertically to make the excess organic solvent flow down naturally to remove the excess organic solvent. Herein, the period during which the membrane is held vertically is preferably from 1 minute to 5 minutes, more preferably from 1 minute to 3 minutes. When the period of holding the membrane is 1 minute or longer, the polyamide having the intended function is easy to obtain; while, when the period of holding the membrane is 3 minutes or shorter, occurrence of defects due to over-drying of the organic solvent can be inhibited, whereby the lowering of performance can be prevented.

Next, as the step (c), cleaning of the polyamide obtained in the foregoing manner with hot water is performed at a temperature within a range of 25°C to 90°C for 1 minute to 60 minutes. By this treatment, the solute blocking capability of the composite semipermeable membrane and the permeate amount can be still further enhanced. However, when the temperature of the hot water is too high and abrupt cooling is performed after the cleaning treatment with hot water, chemical resistance is deteriorated. Accordingly, the cleaning treatment using hot water is preferably performed in a temperature range of 25°C to 60°C. In the case of performing the cleaning treatment with hot water under high temperatures ranging from 61°C to 90°C, it is preferable that slow cooling is performed after the cleaning treatment with hot water. For example, there is a method of cooling down to room temperature through the contact with waters whose temperatures are decreased stepwise.

Further, in the step of cleaning with hot water, an acid or alcohol may be incorporated into the hot water. By incorporation of an acid or alcohol, it becomes easier to control the formation of hydrogen bonds in the polyamide. Examples of such an acid include inorganic acids such as hydrochloric acid, sulfuric acid and phosphoric acid, and organic acids such as citric acid and oxalic acid. Herein, it is preferable that the acid concentration is adjusted so that the resulting hot water comes to have a pH of 2 or less, preferably a pH of 1 or less. Examples of such alcohol include monohydric alcohols such as methyl alcohol, ethyl alcohol and isopropyl alcohol, and polyhydric alcohols such as ethylene glycol and glycerin. Herein, it is preferable that the alcohol concentration is from 10 wt% to 100 wt%, more preferably from 10 wt% to 50 wt%.

Next, as the step (d), it is preferable to perform conversions of functional groups by bringing the cleaned polyamide into contact with a reagent which produces a diazonium salt or a derivative thereof through the reaction with primary amino groups. Examples of the reagent which produces a diazonium salt or a derivative thereof through the reaction with primary amino groups include aqueous solutions of nitrous acid and salts thereof and aqueous solutions of nitrosyl compounds. Since the aqueous solutions of nitrous acid and nitrosyl compounds have properties of decomposing while evolving gas, it is preferable to produce nitrous acid in succession through the reaction of a nitrite with an acid solution. In general, a nitrite reacts with a hydrogen ion to produce nitrous acid ($HNO_2$), and this reaction proceeds with efficiency under a condition that the pH of the aqueous solutions is 7 or less, preferably 5 or less, further preferably 4 or less. Of such aqueous solutions, the aqueous sodium nitrite solution in which the sodium nitrite reacts with hydrochloric acid or sulfuric acid in aqueous solution is especially preferred in terms of simplicity of handling.

It is preferable that the nitrous acid or nitrite concentration in the reagent which produces a diazonium salt or a derivative thereof through the reaction with primary amino groups is in a range of 0.01wt% to 1 wt%, more preferably in a range of 0.05 wt% to 0.5 wt%. When the concentration thereof is 0.01 wt% or more, sufficient effects can be obtained. On the other hand, when the concentration thereof is 0.1 wt% or less, handling of the solutions is easy.

The temperature of an aqueous nitrous acid solution is preferably from 15°C to 45°C. When the temperature thereof is 15°C or more, a sufficient reaction time can be obtained. On the other hand, when the temperature thereof is 45°C or less, the handling thereof is easy because decomposition of nitrous acid hardly occurs at such temperatures.

It is essential only that the period during which the polyamide is in contact with an aqueous solution of nitrous acid is a period required for producing at least either one of a diazonium salt and a derivative thereof, and hence short-time treatment is possible in the case of using the solution having a high concentration, while long-time treatment is required in the case of using the solution having a low concentration. Accordingly, in the case of using the solution having the concentration specified above, it is preferable that the treatment time is within 10 minutes, more preferably within 3 minutes. In addition, since the method of bringing the polyamide into contact with the aqueous solution of nitrous acid has no particular restrictions, a coating of reagent solution may be applied, or the composite semipermeable membrane may be impregnated into a reagent solution. As the solvent for dissolving the reagent, any solvent may be used so long as it can dissolve the reagent and does not erode the composite semipermeable membrane. Further, a surfactant, an acidic compound, an alkaline compound and the like may be incorporated into the solution so long as they do not inhibit the reaction between the primary amino groups and the reagent.

By the subsequent step (e), a part of the produced diazonium salts or derivatives thereof is converted into

different functional groups. The diazonium salts or derivatives thereof are partially converted e.g. into phenolic hydroxyl groups through the reaction with water. On the other hand, when they are brought into contact with solutions containing chloride ions, bromide ions, cyanide ions, iodide ions, fluoroboric acid, hydrophosphorous acid, sodium bisulfite, sulfurous acid ions, aromatic amines, hydrogen sulfide, thiocyanic acid or the like, a part of the diazonium salts or derivatives thereof are converted into functional groups corresponding to those solutions, respectively. By contact with aromatic amines, a diazo coupling reaction is caused to make it possible to introduce aromatic groups onto the membrane surface. Incidentally, those reagents may be used alone or as a mixture of any two or more thereof, or contact with different reagents may be performed at two or more times.

Examples of a reagent which causes a diazo coupling reaction include a compound having an electron-rich aromatic ring or a heteroaromatic ring. Examples of a compound having an electron-rich aromatic or heteroaromatic ring include heterocyclic aromatic compounds having no substituents, aromatic compounds having electron-donating substituents and heterocyclic aromatic compounds having electron-donating substituents. Examples of the electron-donating substituent include an amino group, an ether group, a thioether group, an alkyl group, an alkenyl group, an alkynyl group and an aryl group. Examples of such a compound include aniline, a methoxyaniline whose methoxy and amino groups are bonded to its benzene ring in an ortho, meta or para positional relation, a phenylenediamine whose two amino groups are attached to its benzene ring in an ortho, meta or para positional relation, 1,3,5-triaminobenzene, 1,2,4-triaminobenzene, 3,5-diaminobenzoic acid, 3-aminobenzylamine, 4-aminobenzylamine, sulfanilic acid, 3,3'-dihydroxybenzidine, 1-aminonaphthalene, 2-aminonaphthalene, and N-alkylation products of these compounds.

Of these reagents, in particular, phenylenediamine and triaminobenzene which have amino groups can be preferably used. This is because they can produce the effect of introducing amino groups, which are required for bonding of a hydrophilic polymer to the membrane surface in the step (b), onto the membrane surface through the diazo coupling reaction. The concentration of the reagent to be reacted with a diazonium salt or a derivative thereof and the period to contact such a reagent can be adjusted as appropriate for obtaining the intended effect. The temperature to contact the reagent is preferably from 10°C to 90°C. When the temperature is lower than 10°C, the diazo coupling reaction proceeds slowly and phenolic hydroxyl groups are produced by side reaction with water, and therefore such a temperature range is not preferable. On the other hand, When the temperature is higher than 90°C, a contraction of the polyamide separation functional layer occurs, whereby the permeate amount is decreased, and therefore, such a temperature range is not preferable.

Lastly, as the step (b), a hydrophilic polymer is introduced onto the polyamide via amide linkages. In this step, it is preferable to use the method of bringing an aqueous solution containing a hydrophilic polymer and a condensation agent into contact with the polyamide surface. The functional groups present at the polyamide surface and activated functional groups contained in the hydrophilic polymer undergo polycondensation reaction to form amide linkages, whereby the hydrophilic polymer is introduced. As to the method of bringing an aqueous solution containing a hydrophilic polymer and a condensation agent into contact with the separation functional layer, there are no particular restrictions, and any method may be adopted as long as it allows contact of the polyamide with the hydrophilic polymer and the condensation agent. For example, the composite semipermeable membrane in its entirety may be immersed in an aqueous solution containing a hydrophilic polymer and a condensation agent, or an aqueous solution containing a hydrophilic polymer and a condensation agent may be sprayed on the surface of the composite semipermeable membrane.

Hydrophilic polymers to be brought into contact with the polyamide surface may be used alone or as a mixture of several varieties thereof. The hydrophilic polymers are used favorably in a state of aqueous solution in which the concentration thereof is from 10 ppm to 1% by weight. When the hydrophilic polymer concentration is 10 ppm or more, functional groups present in the polyamide can sufficiently react with hydrophilic polymers. On the other hand, when the hydrophilic polymer concentration exceeds 1% by weight, the layer of hydrophilic polymers becomes thick and causes a reduction in permeate amount.

Further, other compounds can also be mixed into the aqueous solution of hydrophilic polymers. For example, for the purpose of promoting the reaction between the polyamide surface and hydrophilic polymers, alkaline metal compounds such as sodium carbonate, sodium hydroxide and sodium phosphate, may be added. Furthermore, addition of a surfactant such as sodium dodecyl sulfate or sodium benzenesulfonate is also preferable for the purpose of removing substances having remained in the polyamide, such as organic solvent immiscible with water, the monomers of the polyfunctional acid halides and the polyfunctional amines, and oligomers produced by reaction between these monomers.

The term "a condensation agent" as used in the present invention refers to a compound which can activate carboxy groups in water and proceed with condensation reaction between the carboxy groups and amino groups of the polyamide. Examples of such a compound include 1-ethyl-3-(3-dimethylaminopropyl)carbodiimide hydrochloride, 1,3-bis(2,2-dimethyl-1,3-dioxolane-4-ylmethyl)carbodiimide, and 4-(4,6-dimethoxy-1,3,5-triazine-2-yl)-4-methylmorpholinium chloride (hereafter abbreviated as DMT-MM). Of these compounds, in particular, DMT-MM is preferably used because of its stability during the condensation reaction, low toxicity of by-products produced after the condensation reaction, and the like.

The concentration of the condensation agent in the aqueous solution containing hydrophilic polymers and the condensation agent has no particular limitations so long as it is higher than the concentration of carboxy groups to be activated, and the condensation agent can produce sufficient effect on condensation between reactive groups.

The suitable pH of the aqueous solution containing hydrophilic polymers and a condensation agent is from 2 to 6. The pH higher than 6 is undesirable because negative charges are formed through the dissociation of carboxy groups to lower the frequency of contacts between the polyamide and the hydrophilic polymers, whereby the efficiency of condensation reaction is decreased. On the other hand, the use of the aqueous solution with pH lower than 2 is also undesirable because there occurs deterioration due to acid, whereby salt removal capabilities of the composite semipermeable membrane is lowered.

It is preferable that the composite semipermeable membrane of the present invention hardly causes reduction in permeate amount between before and after coating its polyamide surface with a hydrophilic polymer. To be more specific, when filtration of an aqueous solution having a pH of 6.5 and a NaCl concentration of 2,000 mg/L is performed for one hour at 25°C under a pressure of 1.55 MPa using the composite semipermeable membrane whose polyamide surface thereof is in a state before being coated with a hydrophilic polymer, the permeate amount obtained is represented as F1, and the permeate amount measured under the same conditions as mentioned above using the composite semipermeable membrane whose polyamide surface thereof is in a state after being coated with a hydrophilic polymer is represented as F2. In the present invention, it is preferable that the F2/F1 value is 0.80 or more, more preferably 0.90 or more. By using the composite semipermeable membrane having such a F2/F1 value, adhesion of foulants to the separation functional layer surface can be inhibited without great reduction in permeate amount.

3. Use of Composite Semipermeable Membrane

The composite semipermeable membrane of the present invention is preferably used in the form of a spiral-type composite semipermeable membrane element obtained by winding the composite semipermeable membrane around a cylindrical collecting pipe having a large number of perforations, together with a raw-water channel member such as a plastic net, a permeate channel member such as tricot, and a film optionally used for enhancing pressure resistance. Further, such elements can be connected in series or in parallel and housed in a pressure vessel, thereby being configured as a composite semipermeable membrane module.

Moreover, the composite semipermeable membrane, the element thereof, or the module can be combined with a pump for supplying raw water thereto, a device for pretreating the raw water, etc., thereby configuring a fluid separator. By using this separator, raw water can be separated into permeate such as potable water, and a concentrate which has not passed through the membrane. Thus, water suited for a purpose can be obtained.

By the use of the composite semipermeable membrane of the present invention, it becomes possible to operate the composite semipermeable membrane and the fluid separation element in a low pressure region, e.g. under an operating pressure of 0.1 MPa to 3 MPa, more preferably 0.1 MPa to 1.55 MPa, while ensuring a high permeate amount. Since the operating pressure can be lowered, the capacity of a pump to be used can be lowered, whereby not only the power consumption can be reduced but also costs for fresh water generation can be reduced. When the operating pressure is less than 0.1 MPa, there is a tendency to reduce the permeate amount. On the other hand, when the operating pressure exceeds 3 MPa, the power consumption of a pump and the like increases and clogging of the membrane by fouling tends to occur.

When filtration of an aqueous sodium chloride solution having a concentration of 2,000 mg/L and a pH of 6.5 through the composite semipermeable membrane of the present invention is performed for 24 hours at 25°C under an operating pressure of 1.55 MPa, it is preferable that the permeate amount obtained is from 0.50 $m^3/m^2$/day to 3.0 $m^3/m^2$/day. The composite semipermeable membrane ensuring such a performance can be produced by a method selected as appropriate e.g. from the methods described above. With the permeate amount in a range of 0.50 $m^3/m^2$/day to 3.0 $m^3/m^2$/day, the occurrence of fouling can be inhibited in moderation and stable generation of fresh water becomes possible. The permeate amount in a range of 0.80 $m^3/m^2$/day to 3.0 $m^3/m^2$/day is more preferable from a practical point of view.

There may be cases where sewage to be treated with the composite semipermeable membrane of the present invention contains organic substances resistant to biodegradation, such as surfactants, in a state that they are not decomposed thoroughly by biological treatment. In the treatment with conventional composite semipermeable membranes, surfactants are adsorbed on the membrane surface to result in lowering of the permeate amount. On the other hand, since the composite semipermeable membrane of the present invention ensures a high permeate amount and has high ability to detaching foulants, and hence it can develop stable performance.

Here, the composite semipermeable membrane of the present invention has high capability to inhibit foulants from adhering thereto. More specifically, the permeate amount obtained when filtration of an aqueous solution having a pH of 6.5 and a NaCl concentration of 2,000 mg/L is performed for one hour at 25°C under an operating pressure of 1.55 MPa through the composite semipermeable membrane of the present invention is represented as F3, and the

permeate amount obtained when subsequently adding polyoxyethylene(10) octyl phenyl ether to the aqueous solution described above so as to have a concentration thereof of 100mg/L and the filtration is performed for one hour is represented as F4. It is preferable that the F4/F3 value is 0.80 or more, more preferably 0.90 or more. By using such a composite semipermeable membrane, fouling hardly occurs on the membrane surface, and a high permeate amount can be stably maintained over an extended time period.

EXAMPLES

The present invention will be illustrated by reference to the following examples, but the present invention should not be construed as being limited to these examples in any way.

(Salt Removal Ratio)

Evaluative water adjusted to have a NaCl concentration of 2,000 ppm, a pH of 7 and a temperature of 25°C was fed to a composite semipermeable membrane under an operating pressure of 1.55 MPa, whereby filtration treatment with the membrane was performed. The feed water and permeate obtained were subjected to conductivity measurements with a conductivity meter manufactured by DKK-TOA CORPORATION, whereby their respective practical salinities, namely NaCl concentrations, were obtained. Based on the thus obtained NaCl concentrations and the following expression, the NaCl removal ratio was calculated.

$$\text{NaCl removal ratio (\%)} = 100 \times \{1 - (\text{NaCl concentration in the permeate/NaCl concentration in the feed water})\}$$

(Permeate Amount)

In the examination described in the above paragraph, the amount of portion of the feed water (aqueous NaCl solution) which had permeated the membrane, was measured, and the measured value was converted into a per-day amount (cubic meter) of permeate per square meter of membrane surface, and the converted value was defined as membrane permeate flux ($m^3/m^2$/day).

Incidentally,, membrane performance at membrane-forming was measured as follows. To begin with, the membrane performance was measured using a composite semipermeable membrane before undergoing introduction of a hydrophilic polymer onto the polyamide surface thereof. To be more specific, the permeate amount obtained by performing one-hour filtration of an aqueous solution having a pH of 6.5 and a NaCl concentration of 2,000 mg/L through the composite semipermeable membrane at 25°C under an operating pressure of 1.55 MPa was measured, and was represented as F1. Then, the same measurement as the above was made using the composite semipermeable membrane having undergone introduction of a hydrophilic polymer onto the polyamide surface thereof, and the permeate amount measured was represented as F2. And the F2/F1 value was calculated.

In evaluating the permeate amount after occurrence of fouling, the permeate amount obtained when one-hour filtration of an aqueous solution having a pH of 6.5 and a NaCl concentration of 2,000 mg/L through the composite semipermeable membrane at 25°C under an operating pressure of 1.55 MPa was measured and was represented as F3, and subsequent thereto, polyoxyethylene(10) octyl phenyl ether was added to the aqueous solution so as to have a concentration thereof of 100mg/L, and the filtration of the resulting solution is performed for one hour. The permeate amount thus obtained was measured, and was represented as F4. From these measurements, the F4/F3value was calculated.

(Mean-Square Surface Roughness)

A composite semipermeable membrane was cleaned with ultra-pure water, and air-dried. A piece having a size of 1 cm square was cut out from the membrane, stuck to a slide glass with a double-faced tape, and mean-square surface roughness of the separation functional layer was measured by using an atomic force microscope (Nano Scope IIIa manufactured by Digital Instruments Corporation) in a tapping mode. The measurements were performed at room temperature and atmospheric pressure, and the cantilever used therein was Veco Instruments NCHV-1. The scanning speed was 1 Hz, and the number of sampling points was 512 pixels square. The analysis software used was Gwyddion. To the measurement results were made one-dimensional base line corrections (inclination corrections) on both X- and Y-axes.

(Degree of Fiber Orientation in Substrate)

Ten small-piece samples were randomly cut out from nonwoven fabric, and photographs thereof were taken under a scanning electron microscope at a magnification of 100 to 1,000 times. Ten fibers were chosen from each sample, and on the 100 fibers in total were made angle measurements, in which the longitudinal direction (lengthwise direction) of the nonwoven fabric was taken as 0° and the width direction (traverse direction) of the nonwoven fabric was taken as 90°. And the average value of the thus measured angles was calculated and round off to the nearest integer. The thus obtained numeric value was defined as the degree of fiber orientation.

(Air Permeability)

Air permeability was measured with a Frazier-type testing machine based on JIS L1096 (2010). A specimen having a size of 200 mm x 200 mm was cut out from a substrate, and mounted in a Frazier-type testing machine. And the intake fun and air hole of the testing machine were adjusted so that the inclined barometer came to indicate a pressure of 125 Pa, and on the basis of the pressure indicated by the vertical barometer under this condition and the type of the air hole used, the air permeability was determined. The Frazier-type testing machine used herein was an air permeability tester KES-F8-AP1 manufactured by KATO TECH CO., LTD.

(Functional-Group Analysis of Polyamide by $^{13}C$ Solid-State NMR Method)

The method of $^{13}C$ solid-state NMR measurement on polyamide is presented below. First of all, a composite semipermeable membrane having polyamide on a supporting membrane was produced by the method according to the present invention. Then, by physically delaminating the substrate from the composite semipermeable membrane, the porous supporting layer and the polyamide were collected. The collected matter was dried by being left standing for 24 hours at 25°C, and then added little by little to a beaker containing dichloromethane with stirring. Thereby the polymer constituting the porous supporting layer was dissolved in the dichloromethane. The insoluble matter in the beaker was collected with a filter paper, and cleaned with dichloromethane for several times. The thus collected polyamide was dried with a vacuum dryer, whereby residual dichloromethane was removed. The thus obtained polyamide was formed into a powdery specimen by freeze crushing, sealed in a sample tube for use in solid-state NMR method measurements and subjected to $^{13}C$ solid-state NMR measurements according to CP/MAS and DD/MAS methods. For the $^{13}C$ solid-state NMR measurements, it is possible to use e.g. CM-300 manufactured by Chemagnetics Inc. From the spectra obtained, the amount of each functional group was quantitatively evaluated by making a peak division into individual peaks assigned to different functional group-attached carbon atoms, respectively, and determining the area of each individual peak.

(Production of Composite Semipermeable Membrane)

Comparative Example 1

A 15.0 wt% DMF solution of polysulfone (PSf) was cast on a polyester nonwoven fabric made of long fibers (air permeability: 2.0 $cc/cm^2/sec$) under a condition of 25°C, and immediately immersed in pure water and left standing for 5 minutes. Thus a supporting membrane provided with a porous supporting layer having a thickness of 40 $\mu$m was produced.

Next, this supporting membrane was immersed in a 3.5 wt% aqueous solution of m-PDA, then excess of the aqueous solution was removed, and further an n-decane solution containing TMC in a concentration of 0.14 wt% was applied to the porous supporting layer so as to fully wet all over the porous supporting layer surface. Then, in order to remove excess of the solution from the membrane, the membrane was held vertically, whereby the solution was drained off the membrane. Further, the membrane was dried by blowing of 25°C air to the membrane surface by means of a blower, and then cleaned with 40°C pure water. On the thus obtained composite semipermeable membrane were made measurements of mean-square surface roughness, membrane performance at membrane-forming and membrane performance after fouling. These measurement results are shown in Table 1.

Example 1

The composite semipermeable membrane obtained in Comparative Example 1 was kept for 24 hours at 20°C in contact with an aqueous solution containing 100 ppm of polyacrylic acid (weight average molecular weight: 2,000, a product of TOAGOSEI CO., LTD.) and 0.1% of DMT-MM, and then cleaned with water. The measurements for evaluations were made on the thus obtained composite semipermeable membrane, and the membrane performances thereof are shown in Table 1.

Example 2

The composite semipermeable membrane obtained in Comparative Example 1 was kept for 24 hours at 20°C in contact with an aqueous solution containing 100 ppm of polyacrylic acid (weight average molecular weight: 5,000, a product of Wako Pure Chemical Industries, Ltd.) and 0.1% of DMT-MM, and then cleaned with water. The measurements for evaluations were made on the thus obtained composite semipermeable membrane, and the membrane performances thereof are shown in Table 1.

Example 3

The composite semipermeable membrane obtained in Comparative Example 1 was kept for 24 hours at 20°C in contact with an aqueous solution containing 100 ppm of polyacrylic acid (weight average molecular weight: 25,000, a product of Wako Pure Chemical Industries, Ltd.) and 0.1% of DMT-MM, and then cleaned with water. The measurements for evaluations were made on the thus obtained composite semipermeable membrane, and the membrane performances thereof are shown in Table 1.

Example 4

The composite semipermeable membrane obtained in Comparative Example 1 was kept for 24 hours at 20°C in contact with an aqueous solution containing 100 ppm of polyacrylic acid (weight average molecular weight: 500,000, a product of TOAGOSEI CO., LTD.) and 0.1% of DMT-MM, and then cleaned with water. The measurements for evaluations were made on the thus obtained composite semipermeable membrane, and the membrane performances thereof are shown in Table 1.

Example 5

The composite semipermeable membrane obtained in Comparative Example 1 was kept for 24 hours at 20°C in contact with an aqueous solution containing 100 ppm of polyacrylic acid (weight average molecular weight: 1,250,000, a product of Aldrich Corporation) and 0.1% of DMT-MM, and then cleaned with water. The measurements for evaluations were made on the thus obtained composite semipermeable membrane, and the membrane performances thereof are shown in Table 1.

Example 6

The composite semipermeable membrane obtained in Comparative Example 1 was kept for 24 hours at 20°C in contact with an aqueous solution containing 100 ppm of polyacrylic acid-polyvinyl pyrrolidone copolymer (weight average molecular weight: 96,000, polyacrylic acid content: 25%, a product of Aldrich Corporation) and 0.1% of DMT-MM, and then cleaned with water. The measurements for evaluations were made on the thus obtained composite semipermeable membrane, and the membrane performances thereof are shown in Table 1.

Example 7

The composite semipermeable membrane obtained in Comparative Example 1 was kept for 24 hours at 20°C in contact with an aqueous solution containing 100 ppm of polyacrylic acid-maleic acid copolymer (weight average molecular weight: 10,000, trade name: A-6330, a product of TOAGOSEI CO., LTD.) and 0.1% of DMT-MM, and then cleaned with water. The measurements for evaluations were made on the thus obtained composite semipermeable membrane, and the membrane performances thereof are shown in Table 1.

Example 8

The composite semipermeable membrane obtained in Comparative Example 1 was kept for 24 hours at 20°C in contact with an aqueous solution containing 100 ppm of polyacrylic acid-vinylsulfonic acid copolymer (weight average molecular weight: 2,000, trade name: A-6016A, a product of TOAGOSEI CO., LTD.) and 0.1% of DMT-MM, and then cleaned with water. The measurements for evaluations were made on the thus obtained composite semipermeable membrane, and the membrane performances thereof are shown in Table 1.

Example 9

The composite semipermeable membrane obtained in Comparative Example 1 was kept for 24 hours at 20°C in contact with an aqueous solution containing 100 ppm of polyacrylic acid-vinylsulfonic acid copolymer (weight average molecular weight: 10,000, trade name: A-6012, a product of TOAGOSEI CO., LTD.) and 0.1% of DMT-MM, and then cleaned with water. The measurements for evaluations were made on the thus obtained composite semipermeable membrane, and the membrane performances thereof are shown in Table 1.

Comparative Example 2

The composite semipermeable membrane obtained in Comparative Example 1 was kept for 24 hours at 20°C in contact with an aqueous solution containing 100 ppm of polyacrylic acid (weight average molecular weight: 5,000, a product of Wako Pure Chemical Industries, Ltd.), and then cleaned with water. The measurements for evaluations were made on the thus obtained composite semipermeable membrane, and the membrane performances thereof are shown in Table 1.

Comparative Example 3

The composite semipermeable membrane obtained in Comparative Example 1 was kept for 24 hours at 20°C in contact with an aqueous solution containing 100 ppm of succinic acid (a product of Wako Pure Chemical Industries, Ltd.) and 0.1% of DMT-MM, and then cleaned with water. The measurements for evaluations were made on the thus obtained composite semipermeable membrane, and the membrane performances thereof are shown in Table 1.

Comparative Example 4

The composite semipermeable membrane obtained in Comparative Example 1 was immersed for 2 minutes in an aqueous solution prepared by mixing an aqueous solution containing 0.5 wt% of polyvinyl alcohol (saponification degree: 88%, weight average molecular weight: 2,000, a product ofNACALAI TESQUE INC.) and 0.2 wt% of glutaraldehyde with hydrochloric acid as an acid catalyst so that the concentration thereof was 0.1 mole/L. The thus obtained membrane was held vertically for 1 minute, whereby excess of the solution was drained off the membrane. Then the resulting membrane was dried at 90°C for 4 minutes with a hot-air dryer. Thus, a composite semipermeable membrane having the separation functional layer coated with polyvinyl alcohol was obtained. Before making evaluations, the thus obtained composite semipermeable membrane was subjected to hydrophilization treatment by 10-minute immersion in a 10% aqueous solution of isopropanol. The measurements for evaluations were made on the thus obtained composite semipermeable membrane, and the membrane performances thereof are shown in Table 1.

Table 1

| | AFM | Membrane performance at membrane-forming | | | Membrane performance after fouling | |
|---|---|---|---|---|---|---|
| | Mean-square surface roughness | NaClremoval ratio | Membrane permeate flux | F2/F1 | Membrane permeate flux | F4/F3 |
| | (nm) | (%) | ($m^3/m^2$/day) | (-) | ($m^3/m^2$/day) | (-) |
| Example 1 | 86 | 99.2 | 0.92 | 0.91 | 0.82 | 0.89 |
| Example 2 | 82 | 99.2 | 0.93 | 0.92 | 0.83 | 0.89 |
| Example 3 | 80 | 99.2 | 0.94 | 0.93 | 0.85 | 0.90 |
| Example 4 | 84 | 99.3 | 1.00 | 0.99 | 0.89 | 0.89 |
| Example 5 | 88 | 99.3 | 1.01 | 1.00 | 0.89 | 0.88 |

(continued)

| | AFM | Membrane performance at membrane-forming | | | Membrane performance after fouling | |
|---|---|---|---|---|---|---|
| | Mean-square surface roughness | NaCl removal ratio | Membrane permeate flux | F2/F1 | Membrane permeate flux | F4/F3 |
| | (nm) | (%) | ($m^3/m^2$/day) | (-) | ($m^3/m^2$/day) | (-) |
| Example 6 | 83 | 99.2 | 0.93 | 0.92 | 0.83 | 0.89 |
| Example 7 | 82 | 99.2 | 1.00 | 0.99 | 0.87 | 0.87 |
| Example 8 | 87 | 99.2 | 0.90 | 0.89 | 0.80 | 0.89 |
| Example 9 | 85 | 99.2 | 0.94 | 0.93 | 0.83 | 0.88 |
| Comp. Ex. 1 | 83 | 99.2 | 1.01 | - | 0.51 | 0.50 |
| Comp. Ex. 2 | 84 | 99.2 | 0.99 | 0.98 | 0.51 | 0.52 |
| Comp. Ex. 3 | 83 | 99.1 | 0.94 | 0.93 | 0.53 | 0.56 |
| Comp. Ex. 4 | 30 | 99.4 | 0.79 | 0.78 | 0.56 | 0.71 |

Comparative Example 5

The composite semipermeable membrane obtained in Comparative Example 1 was immersed for 1 minute in a 0.2 wt% aqueous solution of sodium nitrite adjusted to pH 3 and 35°C, in which the pH adjustment of the sodium nitrite solution had been made by the use of sulfuric acid, and further immersed in a 0.1 wt% aqueous solution of sodium sulfite for 2 minutes at 35°C, whereby a composite semipermeable membrane of Comparative Example 5 was obtained. On the thus obtained composite semipermeable membrane were made measurements of amounts of functional groups in the polyamide, mean-square surface roughness, membrane performance at membrane-forming and membrane performance after fouling. These measurement results are shown in Table 2.

Comparative Example 6

The composite semipermeable membrane obtained in Comparative Example 1 was immersed for 1 minute in a 0.2 wt% aqueous solution of sodium nitrite adjusted to pH 3 and 35°C, in which the pH adjustment of the sodium nitrite solution had been made by the use of sulfuric acid, and further immersed in a 0.15 wt% aqueous solution of m-PDA for 1 minute at 35°C, thereby causing diazo coupling reaction. Lastly, the thus treated membrane was immersed in a 0.1 wt% aqueous solution of sodium sulfite for 2 minutes at 35°C, thereby producing a composite semipermeable membrane of Comparative Example 6. The measurements for evaluations were made on the thus obtained composite semipermeable membrane, and the membrane performances thereof are shown in Table 2.

Comparative Example 7

The composite semipermeable membrane obtained in Comparative Example 6 was immersed for 24 hours at 25°C in an aqueous solution containing 0.1 wt% of DMT-MM and having a pH of 4, and then cleaned with pure water. Thus, a composite semipermeable membrane of Comparative Example 7 was obtained. The measurements for evaluations were made on the thus obtained composite semipermeable membrane, and the membrane performances thereof are shown in Table 2.

Comparative Example 8

The composite semipermeable membrane obtained in Comparative Example 6 was immersed for 24 hours at 25°C in an aqueous solution containing 0.01 wt% of polyacrylic acid (weight average molecular weight: 5,000, a product of Wako Pure Chemical Industries, Ltd.) and having a pH of 4, and then cleaned with pure water. Thus, a composite semipermeable membrane of Comparative Example 8 was obtained. The measurements for evaluations were made on the thus obtained composite semipermeable membrane, and the membrane performances thereof are shown in Table 2.

Comparative Example 9

The composite semipermeable membrane obtained in Comparative Example 6 was immersed for 24 hours at 25°C in an aqueous solution containing 0.01 wt% of succinic acid (a product of Wako Pure Chemical Industries, Ltd.) and having a pH of 4, and then cleaned with pure water. Thus, a composite semipermeable membrane of Comparative Example 9 was obtained. The measurements for evaluations were made on the thus obtained composite semipermeable membrane, and the membrane performances thereof are shown in Table 2.

Example 10

The composite semipermeable membrane obtained in Comparative Example 5 was immersed for 24 hours at 25°C in an aqueous solution containing 0.01 wt% of polyacrylic acid (weight average molecular weight: 5,000, a product of TOAGOSEI CO., LTD.) and 0.1 wt% of DMT-MM and having a pH of 4, and then cleaned with pure water. Thus, a composite semipermeable membrane of Example 10 was obtained. The measurements for evaluations were made on the thus obtained composite semipermeable membrane, and the membrane performances thereof are shown in Table 2.

Example 11

The composite semipermeable membrane obtained in Comparative Example 6 was immersed for 24 hours at 20°C in an aqueous solution containing 0.01 wt% of polyacrylic acid (weight average molecular weight: 5,000) and 0.1 wt% of DMT-MM and having a pH of 4, and then washed with pure water. Thus, a composite semipermeable membrane of Example 11 was obtained. The measurements for evaluations were made on the thus obtained composite semipermeable membrane, and the membrane performances thereof are shown in Table 2.

Example 12

A composite semipermeable membrane of Example 12 was produced in the same manner as in Example 11, except that the diazo coupling reaction was performed at 35°C through one-minute immersion in 0.05 wt% aqueous solution of m-PDA. The measurements for evaluations were made on the thus obtained composite semipermeable membrane, and the membrane performances thereof are shown in Table 2.

Example 13

A composite semipermeable membrane of Example 13 was produced in the same manner as in Example 11, except that the diazo coupling reaction was performed at 35°C through one-minute immersion in 0.3 wt% aqueous solution of m-PDA. The measurements for evaluations were made on the thus obtained composite semipermeable membrane, and the membrane performances thereof are shown in Table 2.

Example 14

The composite semipermeable membrane obtained in Comparative Example 6 was immersed for 24 hours at 25°C in an aqueous solution containing 0.01 wt% of polyacrylic acid (weight average molecular weight: 2,000, a product of TOAGOSEI CO., LTD.) and 0.1 wt% of DMT-MM and having a pH of 4, and then cleaned with pure water. Thus, a composite semipermeable membrane of Example 14 was obtained. The measurements for evaluations were made on the thus obtained composite semipermeable membrane, and the membrane performances thereof are shown in Table 2.

Example 15

The composite semipermeable membrane obtained in Comparative Example 6 was immersed for 24 hours at 25°C in an aqueous solution containing 0.01 wt% of polyacrylic acid (weight average molecular weight: 500,000, a

product of TOAGOSEI CO., LTD.) and 0.1 wt% of DMT-MM and having a pH of 4, and then cleaned with pure water. Thus, a composite semipermeable membrane of Example 15 was obtained. The measurements for evaluations were made on the thus obtained composite semipermeable membrane, and the membrane performances thereof are shown in Table 2.

Example 16

The composite semipermeable membrane obtained in Comparative Example 6 was immersed for 24 hours at 25°C in an aqueous solution containing 0.01 wt% of polyacrylic acid-polyvinyl pyrrolidone copolymer (weight average molecular weight: 96,000, polyacrylic acid content: 25%, a product of Aldrich Corporation) and 0.1 wt% of DMT-MM and having a pH of 4, and then cleaned with water. Thus, a composite semipermeable membrane of Example 16 was obtained. The measurements for evaluations were made on the thus obtained composite semipermeable membrane, and the membrane performances thereof are shown in Table 2.

Example 17

The composite semipermeable membrane obtained in Comparative Example 6 was immersed for 24 hours at 25°C in an aqueous solution containing 0.01 wt% of polyacrylic acid-maleic acid copolymer (weight average molecular weight: 10,000, trade name: A-6330, a product of TOAGOSEI CO., LTD.) and 0.1 wt% of DMT-MM and having a pH of 4, and then cleaned with water. Thus, a composite semipermeable membrane of Example 17 was obtained. The measurements for evaluations were made on the thus obtained composite semipermeable membrane, and the membrane performances thereof are shown in Table 2.

Example 18

The composite semipermeable membrane obtained in Comparative Example 6 was immersed for 24 hours at 25°C in an aqueous solution containing 0.01 wt% of polyacrylic acid-vinylsulfonic acid copolymer (weight average molecular weight: 2,000, trade name: A-6016A, a product of TOAGOSEI CO., LTD.) and 0.1 wt% of DMT-MM and having a pH of 4, and then cleased with water. Thus, a composite semipermeable membrane of Example 18 was obtained. The measurements for evaluations were made on the thus obtained composite semipermeable membrane, and the membrane performances thereof are shown in Table 2.

Example 19

The composite semipermeable membrane obtained in Comparative Example 6 was immersed for 24 hours at 25°C in an aqueous solution containing 0.01 wt% of polyacrylic acid-vinylsulfonic acid copolymer (weight average molecular weight: 10,000, trade name: A-6012, a product of TOAGOSEI CO., LTD.) and 0.1 wt% of DMT-MM and having a pH of 4, and then cleaned with water. Thus, a composite semipermeable membrane of Example 19 was obtained. The measurements for evaluations were made on the thus obtained composite semipermeable membrane, and the membrane performances thereof are shown in Table 2.

Table 2

| | Amount of functional groups in polyamide | | AFM | Membrane performance at membrane-forming | | | Membrane performance after fouling | |
|---|---|---|---|---|---|---|---|---|
| | Azo group/amide group | Amino group/amide group | Mean-square surface roughness | NaCl removal ratio | Membrane permeate flux | F2/F1 | Membrane permeate flux | F4/F3 |
| | (-) | (-) | (nm) | (%) | $m^3/m^2/day$ | (-) | $m^3/m^2/day$ | (-) |
| Example 10 | 0.1 | 0.2 | 85 | 99.4 | 1.20 | 0.83 | 0.96 | 0.80 |
| Example 11 | 0.1 | 0.2 | 82 | 99.4 | 1.16 | 0.86 | 1.02 | 0.88 |
| Example 12 | 0.1 | 0.3 | 86 | 99.5 | 1.12 | 0.91 | 1.06 | 0.95 |
| Example 13 | 0.2 | 0.4 | 80 | 99.6 | 1.07 | 0.88 | 1.00 | 0.93 |
| Example 14 | 0.1 | 0.3 | 79 | 99.5 | 1.05 | 0.85 | 0.93 | 0.89 |
| Example 15 | 0.1 | 0.3 | 87 | 99.5 | 1.14 | 0.93 | 1.08 | 0.95 |
| Example 16 | 0.1 | 0.3 | 82 | 99.6 | 1.08 | 0.88 | 0.97 | 0.90 |
| Example 17 | 0.1 | 0.3 | 82 | 99.5 | 1.12 | 0.91 | 0.98 | 0.88 |
| Example 18 | 0.1 | 0.3 | 81 | 99.5 | 1.03 | 0.84 | 0.89 | 0.86 |
| Example 19 | 0.1 | 0.3 | 83 | 99.5 | 1.10 | 0.89 | 0.97 | 0.88 |
| Comp. Ex. 5 | 0.1 | 0.2 | 79 | 99.3 | 1.45 | - | 0.59 | 0.41 |
| Comp. Ex. 6 | 0.1 | 0.3 | 81 | 99.4 | 1.23 | - | 0.54 | 0.44 |

(continued)

| | Amount of functional groups in polyamide | | AFM | Membrane performance at membrane-forming | | | Membrane performance after fouling | |
|---|---|---|---|---|---|---|---|---|
| | Azo group/amide group | Amino group/amide group | Mean-square surface roughness | NaCl removal ratio | Membrane permeate flux | F2/F1 | Membrane permeate flux | F4/F3 |
| | (-) | (-) | (nm) | (%) | $m^3/m^2/day$ | (-) | $m^3/m^2/day$ | (-) |
| Comp. Ex. 7 | 0.1 | 0.3 | 78 | 99.4 | 1.25 | - | 0.49 | 0.39 |
| Comp. Ex. 8 | 0.1 | 0.3 | 83 | 99.4 | 1.22 | - | 0.53 | 0.43 |
| Comp. Ex. 9 | 0.1 | 0.3 | 84 | 99.4 | 1.21 | - | 0.51 | 0.42 |

As demonstrated above, the composite semipermeable membranes produced in accordance with the present invention ensures a high permeate amount and has high capability to inhibit foulants from adhering thereto, thereby being able to stably maintain high performances over an extended time period.

In the above, the present invention has been illustrated in detail by reference to specified embodiments. However, it will be apparent to persons skilled in the art that various changes and modifications can be made without departing from the spirit and the scope of the invention. The present application is based on Japanese Patent Application No. 2013-203122 filed on September 30, 2013, and Japanese Patent Application No. 2013-247197 filed on November 29, 2013, the contents of which are incorporated herein by reference.

INDUSTRIAL APPLICABILITY

By the use of composite semipermeable membranes produced in accordance with the present invention, raw water can be separated into permeate such as potable water, and a concentrate which has not passed through the membrane. Thus, water suited for a purpose can be obtained. The composite semipermeable membranes according to the present invention can be favorably used for desalination of brackish water or seawater in particular.

## Claims

1. A composite semipermeable membrane comprising: a substrate; a porous supporting layer formed on the substrate; and a separation functional layer formed on the porous supporting layer,
   wherein the separation functional layer comprises a polyamide and a hydrophilic polymer containing an acidic group, and
   the polyamide and the hydrophilic polymer are bonded to each other via an amide linkage.

2. The composite semipermeable membrane according to claim 1, wherein a surface of the separation functional layer has a mean-square surface roughness of 60 nm or more.

3. The composite semipermeable membrane according to claim 1 or 2, wherein the acidic group is at least one selected from the group consisting of a carboxy group, a sulfonic acid group, a phosphonic acid group and a phosphoric acid group.

4. The composite semipermeable membrane according to any one of claims 1 to 3, wherein the hydrophilic polymer is a polymer of a compound containing any one component selected from the group consisting of acrylic acid, methacrylic acid and maleic acid.

5. The composite semipermeable membrane according to any one of claims 1 to 4, wherein a copolymerization ratio of a structure containing the acidic group in the hydrophilic polymer is 5 mol% to 100 mol%.

6. The composite semipermeable membrane according to any one of claims 1 to 5, wherein the hydrophilic polymer has a weight average molecular weight of 5,000 or more.

7. The composite semipermeable membrane according to any one of claims 1 to 6, wherein the hydrophilic polymer has a weight average molecular weight of 100,000 or more.

8. The composite semipermeable membrane according to any one of claims 1 to 7, wherein the hydrophilic polymer is a copolymer of two or more components.

9. The composite semipermeable membrane according to claim 8, wherein the copolymer of two or more components contains at least one component selected from the group consisting of polyvinyl alcohol, polyvinyl acetate and polyvinyl pyrrolidone.

10. The composite semipermeable membrane according to any one of claims 1 to 9, wherein the polyamide has azo groups, and
    in functional groups contained in the polyamide, a ratio of (molar equivalent of the azo groups) / (molar equivalent of amide groups) is 0.1 or more, and a ratio of (molar equivalent of amino groups) / (molar equivalent of the amide groups) is 0.2 or more.

**11.** The composite semipermeable membrane according to any one of claims 1 to 10, wherein, after an aqueous solution having a pH of 6.5 and a NaCl concentration of 2,000 mg/L has been allowed to permeate the composite semipermeable membrane for 24 hours at 25°C under a pressure of 1.55 MPa, the composite semipermeable membrane ensures a permeate amount of 0.80 $m^3/m^2$/day or more.

**12.** The composite semipermeable membrane according to any one of claims 1 to 11, having a F2/F1 value of 0.80 or more, in which, when filtration of an aqueous solution having a pH of 6.5 and a NaCl concentration of 2,000 mg/L is performed for one hour at 25°C under a pressure of 1.55 MPa, a permeate amount in a case of using the composite semipermeable membrane whose polyamide surface is in a state before being coated with the hydrophilic polymer is represented as F1, and a permeate amount in a case of using the composite semipermeable membrane whose polyamide surface is in a state after being coated with the hydrophilic polymer is represented as F2.

**13.** The composite semipermeable membrane according to any one of claims 1 to 12, having a F4/F3 value of 0.80 or more, in which F3 represents a permeate amount obtained when filtration of an aqueous solution having a pH of 6.5 and a NaCl concentration of 2,000 mg/L is performed for one hour at 25°C under a pressure of 1.55 MPa through the composite semipermeable membrane, and F4 represents a permeate amount obtained when subsequently adding polyoxyethylene(10) octyl phenyl ether to the aqueous solution so as to have a concentration thereof of 100mg/L and performing the filtration for one hour.

**14.** A method for producing a composite semipermeable membrane comprising: a substrate; a porous supporting layer formed on the substrate; and a separation functional layer formed on the porous supporting layer, said method comprising, as for the separation functional layer:

a step A of bringing an aqueous solution containing a polyfunctional amine and an organic solvent containing a polyfunctional acid halide into contact with each other on the porous supporting layer to form a polyamide, followed by bringing the polyamide into contact with a solution containing a reagent which produces a diazonium salt or a derivative thereof through a reaction with a primary amino group;
a step B of bringing the polyamide into contact with a solution containing a reagent which causes a diazo coupling reaction with a diazonium salt or a derivative thereof; and
a step C of bringing the polyamide into contact with a solution containing: a reagent which converts a carboxyl group into a carboxylic acid derivative; and a hydrophilic polymer having at least either one of acidic groups and hydroxyl groups.

**INTERNATIONAL SEARCH REPORT**

International application No.
PCT/JP2014/076141

A. CLASSIFICATION OF SUBJECT MATTER
*B01D71/56*(2006.01)i, *B01D69/02*(2006.01)i, *B01D69/12*(2006.01)i, *B01D71/82*(2006.01)i, *B32B5/18*(2006.01)i, *B32B27/34*(2006.01)i, *C08G69/48*(2006.01)i, *C08L33/02*(2006.01)i, *C08L77/00*(2006.01)i

According to International Patent Classification (IPC) or to both national classification and IPC

B. FIELDS SEARCHED

Minimum documentation searched (classification system followed by classification symbols)
B01D71/56, B01D69/02, B01D69/12, B01D71/82, B32B5/18, B32B27/34, C08G69/48, C08L33/02, C08L77/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
Thomson Innovation

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2003-200026 A (Toray Industries, Inc.), 15 July 2003 (15.07.2003), claims; paragraphs [0014] to [0016], [0036], [0061] (Family: none) | 1,3-9,11-13<br>2,10<br>14 |
| A | JP 9-52031 A (Toray Industries, Inc.), 25 February 1997 (25.02.1997), claims; paragraphs [0033], [0037] to [0039] (Family: none) | 1-13 |
| Y | JP 2005-169332 A (Toray Industries, Inc.), 30 June 2005 (30.06.2005), claims (Family: none) | 2 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December 2014 (08.12.14) | 06 January 2015 (06.01.15) |
| Name and mailing address of the ISA/<br>Japan Patent Office<br><br>Facsimile No. | Authorized officer<br><br>Telephone No. |

Form PCT/ISA/210 (second sheet) (July 2009)

**INTERNATIONAL SEARCH REPORT**

International application No. PCT/JP2014/076141

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2011/078047 A1 (Toray Industries, Inc.), 30 June 2011 (30.06.2011), claims; paragraphs [0040], [0041]<br>& US 2012/0248027 A1 & EP 2517782 A1<br>& AU 2010336727 A & CN 102665881 A<br>& SG 181590 A & KR 10-2012-0127577 A | 10<br>14 |
| A | JP 2010-240651 A (Saehan Industries, Inc.), 28 October 2010 (28.10.2010), claims<br>& EP 1958685 A1 & AU 2007200609 A<br>& KR 10-2008-0075765 A & CN 101244367 A | 1-14 |
| A | JP 2002-224546 A (Toray Industries, Inc.), 13 August 2002 (13.08.2002), claims; paragraphs [0015] to [0017], [0026] to [0027]<br>(Family: none) | 1-14 |
| A | JP 2001-327840 A (Toray Industries, Inc.), 27 November 2001 (27.11.2001), claims; paragraphs [0055], [0056]<br>(Family: none) | 1-14 |
| A | JP 59-179111 A (Teijin Ltd.), 11 October 1984 (11.10.1984), claims; page 4, lower left column, line 4 to lower right column, line 6<br>(Family: none) | 1-14 |
| A | JP 64-51103 A (The Dow Chemical Co.), 27 February 1989 (27.02.1989), claims; page 12, left column, line 7 to right column, line 8<br>& US 4828700 A & US 4909943 A<br>& US 4894165 A & EP 300428 A2<br>& AU 1915588 A & IL 87126 A<br>& ZA 8805253 A & CN 1031482 A<br>& AU 607240 B & IL 87126 A0 | 1-14 |
| A | JP 2009-536874 A (Dow Global Technologies Inc.), 22 October 2009 (22.10.2009), claims; paragraphs [0032], [0045]<br>& US 2009/0159527 A1 & US 2011/0155660 A1<br>& WO 2007/133362 A1 & KR 10-2009-0010122 A<br>& CN 101460237 A | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011125856 A
- JP 63054905 A
- WO 199734686 A
- JP 2011529789 T
- JP 2010240651 A
- US 20120241373 A
- JP 2013203122 A
- JP 2013247197 A